# EUROPEAN PATENT SPECIFICATION

(11) **EP 4 326 414 B1**
(45) Date of publication and mention of the grant of the patent: **12.11.2025**
(21) Application number: 22726938.8
(22) Date of filing: 11.05.2022
(51) Int. Cl.: B01D 24/00, B01D 24/10, B01D 24/20, B01D 24/46, B01D 24/48

(54) **LAYERED MEDIA BACKWASH WITH INTERNAL DRAFT TUBE**
GESCHICHTETE MEDIENRÜCKSPÜLUNG MIT INNEREM ZUGROHR
LAVAGE À CONTRE-COURANT DE MILIEUX EN COUCHES AVEC TUBE D'ASPIRATION INTERNE

(30) Priority: 25.05.2021 US 202163192831 P
(43) Date of publication of application: 28.02.2024
(73) Proprietor: Siemens Energy, Inc., Orlando, FL 32826 (US)
(72) Inventor: BURCLAFF, Philip A., Weston, Wisconsin 54476 (US); COOLEY, Curtis D., Wausau, Wisconsin 54401 (US)
(74) Representative: HKW Intellectual Property PartG mbB
(86) International application number: PCT/US2022/028708
(87) International publication number: WO 2022/250959

(56) References cited:
- US-A1- 2018 078 880
- US-B2- 10 189 723
- US-B2- 8 747 667
- US-B2- 9 782 694

## Description

### BACKGROUND

Filters for wastewater (or other fluids) often employ filter beds that are used to filter the fluid. As contaminates are removed, these filter beds are periodically backwashed to clean them and allow for continued use. The backwash process tends to thoroughly mix or turn the filter media that makes up the filter bed, thereby making the use of multi-material filter beds difficult.

US 10 189 723 B2 relates to various aspects and embodiments, a system and method for treating a feed stream comprising hydrocarbons, suspended solids, and an aqueous-based liquid. The systems and methods may utilize a stratified multi-media bed that includes at least one layer of a composite media comprising a mixture of a cellulose-based material and a polymer. According to certain aspects, contacting the feed stream with the stratified multi-media bed comprises coalescing and filtering the feed stream. According to at least one aspect, the systems and methods include a draft tube positioned within the stratified multi-media bed that may be utilized for backwashing the layers of filter media.

### SUMMARY

In one aspect, a wastewater filter includes a vessel having a bottom and a side wall that cooperate to define a filter space. A first filter media is positioned within the filter space to define a first media layer, and a second filter media different from the first filter media is positioned within the filter space above the first media layer to define a second media layer, the first media layer and the second media layer cooperating to define an interface plane. A draft tube is positioned within the second media layer and has a first end positioned a first non-zero distance above the interface plane, and a second end disposed a second non-zero distance from a top surface of the second media layer. A backwash fluid line is positioned to inject a backwash fluid into the first filter media, and a backwash gas line is positioned to inject a backwash gas into the draft tube.

In another aspect, a method of backwashing a wastewater filter that includes a draft tube includes positioning a first filter media in a filter space to define a first media layer, the first media layer being disposed a first non-zero distance below a first end of the draft tube, positioning a second filter media in the filter space on top of the first media layer to define a second media layer and an interface plane between the first media layer and the second media layer the second media layer extending a second non-zero distance above a second end of the draft tube. The method also includes injecting a backwash fluid into the first media layer, the backwash fluid having a first flow rate that is selected to mix and roll the first media layer and fluidize the second media layer without mixing the first media layer and the second media layer with one another. The method also includes injecting a backwash gas into the draft tube, the backwash gas having a second flow rate selected to draw a portion of the second filter media from a bottom portion of the second media layer to a top portion of the second media layer.

### BRIEF DESCRIPTION OF THE DRAWINGS

To easily identify the discussion of any particular element or act, the most significant digit or digits in a reference number refer to the figure number in which that element is first introduced.
FIG. 1 is a schematic illustration of a wastewater treatment system that includes two wastewater filters.
FIG. 2 is a schematic illustration of a wastewater filter suitable for use in the wastewater treatment system of FIG. 1.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including," "having," and "comprising," as well as derivatives thereof, are open ended and allow for inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

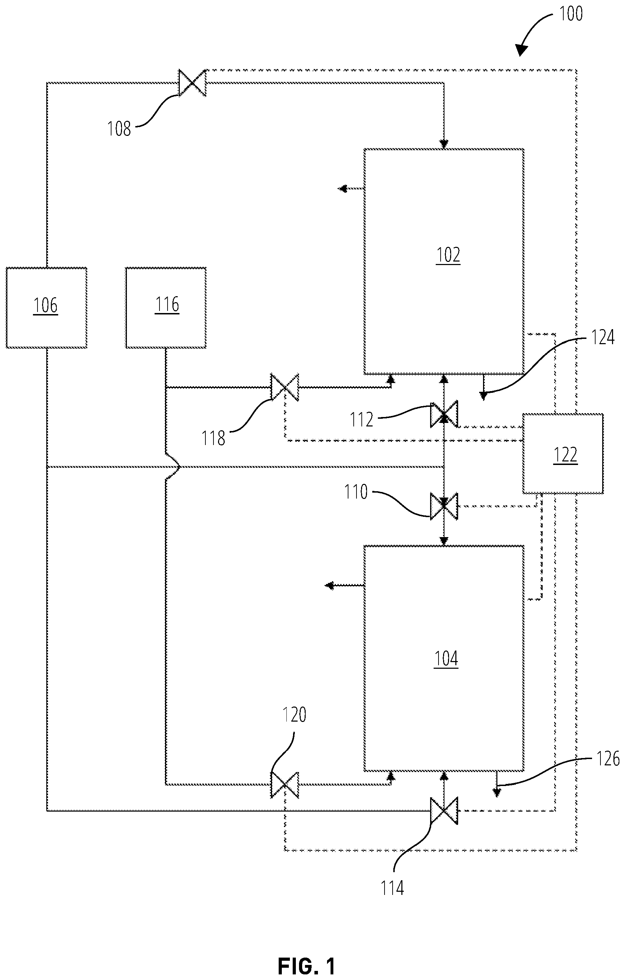

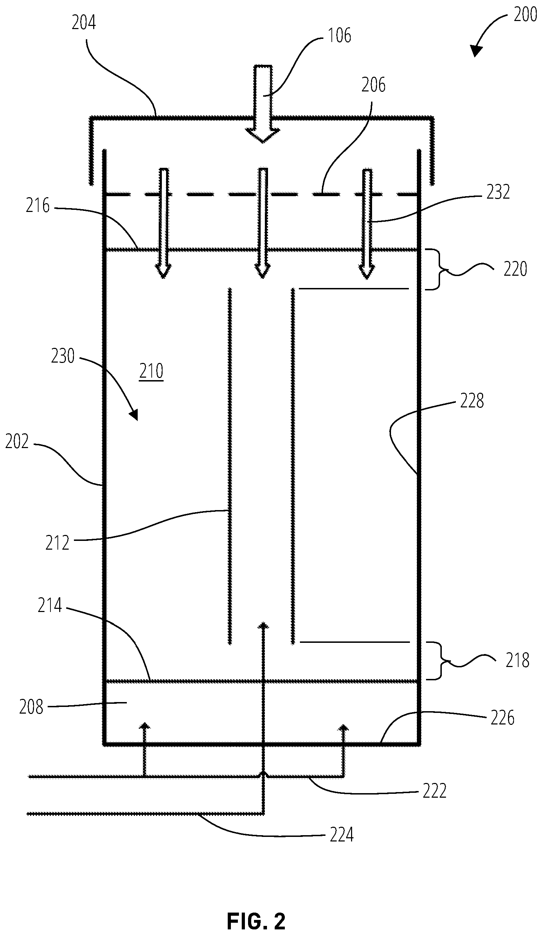

FIG. 1 is a block diagram of a wastewater treatment system 100 that includes a first wastewater filter 102 and a second wastewater filter 104 that may operate alone, in series, or in parallel. The structure of each of the first wastewater filter 102 and the second wastewater filter 104 can be different but are generally identical and will be discussed in detail with regard to FIG. 2. It should be noted that while the following description describes the system in terms of a wastewater treatment system 100, it is equally applicable to systems for cleaning many other fluids. As such, the invention should not be limited to wastewater treatment alone.

A source of wastewater 106 provides water that contains pollutants or waste materials such as oil or suspended solids to a wastewater feed inlet of the first wastewater filter 102 via a valve 108 and/or to a wastewater feed inlet of the second wastewater filter 104 via a valve 110. The source of wastewater 106 may also be connected to the first wastewater filter 102 via a valve 112 to provide a backwash fluid as may be desired. Similarly, the source of wastewater 106 may also be connected to the second wastewater filter 104 via a valve 114 to provide a backwash fluid as may be desired. It should be noted that many of the valve positions illustrated herein could be different in different arrangements of the system. For example, the valves 108 and 110 could be positioned downstream of the respective first wastewater filter 102 and second wastewater filter 104 if desired.

A source of backwash gas 116, such as one provided by an air blower, a compressor, a pressurized tank, etc. is fluidly connected to the first wastewater filter 102 via valve 118 and to the second wastewater filter 104 via a valve 120.

A controller 122, such as a programmable logic controller (PLC) may be connected to each of the valves 108, 110, 112, 114, 118, and 120 to control the position or state (i.e., open, closed) of each of the valves 108, 110, 112, 114, 118, and 120. The controller 122 may also be connected to each of the first wastewater filter 102 and the second wastewater filter 104 to control various aspects of their operation or to receive sensor information to be used in controlling the valves 108, 110, 112, 114, 118, and 120.

The wastewater treatment system 100 is capable of operating in a number of modes. For example, the wastewater treatment system 100 could operate in a mode in which one of the first wastewater filter 102 and second wastewater filter 104 is operating in a filtering mode while the other is operating in a backwash mode. Other modes could include both the first wastewater filter 102 and the second wastewater filter 104 operating in a backwash mode simultaneously, or both operating in the filter mode (either parallel or in series). Finally, one of the first wastewater filter 102 or the second wastewater filter 104 could be operating in the filter mode or the backwash mode with the other of the first wastewater filter 102 or the second wastewater filter 104 being idle or isolated for maintenance, repair, or some other purpose.

When the wastewater treatment system 100 operates in a cycle with both the first wastewater filter 102 and second wastewater filter 104 operating in a filter mode, wastewater from the source of wastewater 106 is delivered to the first wastewater filter 102 through the valve 108 and is delivered to the second wastewater filter 104 through the valve 110. The controller 122 operates to open the valves 108, 110 and to close valves 112, 114, 118, and 120. The wastewater passes through the first wastewater filter 102 or the second wastewater filter 104 and is discharged from a first filtrate outlet 124 or a second filtrate outlet 126 respectively as a cleaned filtrate.

After a period of operation in a filtering mode, the first wastewater filter 102 and/or the second wastewater filter 104 may require a backwash to continue operating at a desired efficiency. Under these conditions, the wastewater treatment system 100 may be transitioned to a backwash mode in which one or both of the first wastewater filter 102 and the second wastewater filter 104 is backwashed. To operate in the backwash mode, valves 108, 110 are closed to prevent wastewater from entering the feed inlet of the first wastewater filter 102 and the second wastewater filter 104. Valves 112, 114 are open to provide a flow of wastewater (or other backwash fluid) into the bottom of each of the first wastewater filter 102 and the second wastewater filter 104 such that the wastewater acts as a backwash fluid. In other constructions, another source of backwash fluid, or another fluid (e.g., filtrate, clean water, etc.) are employed for the backwash mode. In addition, the source of backwash gas 116 may be selectively delivered to the first wastewater filter 102 and/or the second wastewater filter 104 to act as a backwash gas that enhances the efficacy of the backwash mode. The controller 122 operates to close the valves 108, 110, to open the valves 112, 114, and to selectively open the valves 118, 120.

In the system of FIG. 1, the controller 122 may respond to a signal generated by a timer indicating a predetermined backwash period has elapsed and generate one or more control signals to reset the valves to operate the wastewater treatment system 100 in the filtering mode described above. Alternatively, sensors could sense properties of the first wastewater filter 102 and the second wastewater filter 104 to signal the completion of a backwash. Similarly, the controller 122 could monitor the filtrate being discharged from the first wastewater filter 102 and the second wastewater filter 104 to determine when a backwash cycle may be needed. Of course, a manual process could be employed to initiate a backwash if desired.

The controller 122 may also respond to signals from sensors (not shown) positioned at any particular location within the wastewater treatment system 100. For example, a sensor in the first wastewater filter 102 or the second wastewater filter 104 may generate a signal indicating that the pressure drop across the first wastewater filter 102 or the second wastewater filter 104 has reached a predetermined value at which point it may be desirable to perform a backwash. The controller 122 may respond by generating one or more control signals to configure the valves 108, 110, 112, 114, 118, and 120 to start the backwash cycle. The controller 122 may then receive and respond to signals to place one or both of the first wastewater filter 102 and second wastewater filter 104 in service or to take one or the other out of service to run a backwash cycle. In still other systems, a timer is used to periodically initiate a backwash of the first wastewater filter 102 and the second wastewater filter 104.

During the backwash cycles of either the first wastewater filter 102 or the second wastewater filter 104, the controller 122 may signal one or more of the valves 108, 110, 112, 114, 118, and 120 to remain continuously open or to open and close intermittently to pulse the backwash.

While FIG. 1 illustrates the first wastewater filter 102 and the second wastewater filter 104 arranged in parallel, they could be arranged in series. When in series, the first filtrate outlet 124 is connected to the second fluid inlet of the second wastewater filter 104.

FIG. 2 illustrates a wastewater filter 200 suitable for use as either or both of the first wastewater filter 102 and the second wastewater filter 104. The wastewater filter 200 includes a bottom 226 and a side wall 228 that extends from the bottom 226 to define a filter space 230. The bottom 226 can be any shape desired (e.g., circular, rectangular, etc.) with the side wall 228 selected to match and completely enclose the bottom 226. In constructions having a round bottom 226, a single side wall 228 can be employed with other shapes generally requiring more than one side wall 228.

In some constructions, a mesh 206 or a screen extends across a top of the side wall 228. The mesh 206 generally provides little restriction for a flow of wastewater 232 that is provided to the vessel 202 from the source of wastewater 106. However, the mesh 206 may serve to contain filter media during a backwash cycle. A cover 204 may also be provided to cover the vessel 202. The cover 204 could form a seal with the side wall 228 such that the vessel 202 can be pressurized. In other constructions, the cover simply rests on the side wall 228 and no seal is formed such that the filter space 230 remains unpressurized (i.e., operates at atmospheric pressure).

A first filter media 208 is positioned within the filter space 230 in contact with or closely adjacent to the bottom 226 of the vessel 202. A second filter media 210, which is different then the first filter media 208 is positioned on top of the first filter media 208 such that the first filter media 208 and the second filter media 210 cooperate to define an interface plane 214 therebetween. The second filter media 210 defines a top surface 216 such that a depth of the second filter media 210 can be measured from the interface plane 214 to the top surface 216. A depth of the first filter media 208 can be measured from the bottom 226 to the interface plane 214.

As illustrated in FIG. 2, the first filter media 208 has a depth or thickness that is significantly less than that of the second filter media 210. In one construction, the depth of the first filter media 208 is about twelve inches (30.5 cm) with most constructions having a depth between ten and fifteen inches (25.4-38.1 cm). The second filter media 210 has a depth or thickness that may be five to twenty times the depth of the first filter media 208. Of course, other depths could be employed as may be required for the particular wastewater 232 (or other fluid) being filtered. In particular, the depth of the second filter media 210 may vary greatly as compared to the depth of the first filter media 208.

The first filter media 208, in most constructions is composed of finer material arranged to provide a greater density than the second filter media 210. In one construction, the first filter media 208 has a density that is between 120 percent and 300 percent the density of the second filter media 210. Of course, other densities and density ratios could be employed if desired.

Suitable choices of materials for the first filter media 208 include sand and garnet with other filter medias being possible. Suitable choices for the second filter media 210 include walnut shells and synthetic media such as a mixture of synthetic wood and plastic as described in U.S. Patent No. 9,782,694 the contents of which are fully incorporated herein by reference. Of course, other materials could be used as may be required by the wastewater 232 (or other fluid) being filtered. Some characteristics that might make a material suitable for use as a first filter media 208 include a much larger average particle size, high void space which generally translates to higher loading capacity, and a lower density when compared to the lower second filter media 210. In addition, it may be desirable that the first filter media 208 be at least somewhat oleophilic to attract and hold on to oil passing by (but not so much that the oil can't be subsequently shaken off).

A draft tube 212 is located within the filter space 230 and is positioned such that a first end is located a first non-zero distance 218 above the interface plane 214, and a second end is positioned a second non-zero distance 220 below the top surface 216. In this location, the draft tube 212 is completely disposed within the second filter media 210. In preferred constructions, the first non-zero distance 218 is about 3 inches (7.6 cm) above the interface plane 214 with other constructions positioning the lowermost opening of the draft tube 212 between 1 inch (2.5 cm) and 5 inches (12.7 cm) or between 1 inch (2.5 cm) and 10 inches (25.4 cm) above the interface plane 214. In the illustrated construction, the draft tube 212 is a single, straight, cylindrical tube with two open ends sized to allow for the passage of the second filter media 210. However, other shapes, quantities of tubes, and other opening sizes could be employed as may be desired.

A backwash system is provided to allow for the periodic backwashing of the first filter media 208 and the second filter media 210. A backwash fluid line 222 provides a backwash fluid, preferably a liquid to the first filter media 208. In order to provide the backwash fluid to the first filter media 208, the outlets of the backwash fluid line 222 are positioned within the first filter media 208 below the interface plane 214. In addition, to assure that the backwash fluid is distributed throughout the first filter media 208, multiple outlets positioned within the first filter media 208 may be required.

A backwash gas line 224 is also provided to aid in the backwash process. The backwash gas line 224 includes an outlet that is disposed within the draft tube 212 such that any gas that passes through the backwash gas line 224 must pass through the draft tube 212 before exiting the vessel 202.

During operation of the wastewater filter 200, a source of wastewater 106 provides a flow of wastewater 232 to the wastewater filter 200. It should be noted that while the description provided refers to a wastewater 232, other fluids could also be filtered by the wastewater filter 200. As such, the arrangements described herein should not be limited to wastewater filtration alone.

The wastewater 232 enters the wastewater filter 200 near the cover 204 if one is present. The wastewater 232 passes through the mesh 206 if one is employed to distribute the wastewater 232. The wastewater 232 then flows downward through the second filter media 210 either under pressure, under the influence of gravity, or a combination thereof. As the wastewater 232 passes downward, unwanted contaminants (e.g., oil, suspended solids, etc.) are removed by the second filter media 210 and collect in the second filter media 210.

As the wastewater 232 continues downward, it reaches the interface plane 214 and then enters the first filter media 208. The first filter media 208 is finer and denser than the second filter media 210 and therefore will efficiently filter and remove smaller contaminants. After passing through the first filter media 208, the wastewater 232 exits the wastewater filter 200 as a filtered flow of fluid (filtrate). In some constructions a separate filtrate outlet is provided. However, some constructions may use the backwash fluid line 222 as the filtrate outlet. If this arrangement is employed, a screen may be employed in the backwash fluid line 222 to inhibit the unwanted passage of the second filter media 210 out of the wastewater filter 200.

Periodically, the first filter media 208 and the second filter media 210 need to be cleaned to allow them to operate at the desired flow rate and filtering efficiency. In some constructions, the flow rate through the wastewater filter 200 or the pressure drop across the first filter media 208 and/or the second filter media 210 is measured and used to initiate the cleaning. In other arrangements, the cleaning is simply periodically performed (i.e., daily, weekly, etc.). To facilitate this cleaning, a backwash process is initiated. During a backwash, fluids are forced through the first filter media 208 and/or the second filter media 210 in the opposite direction as the normal filtering flow to clean the first filter media 208 and the second filter media 210. However, it is desirable to minimize mixing of the first filter media 208 and the second filter media 210 and to maintain the position and the integrity of the interface plane 214.

With continued reference to FIG. 2, upon initiating the backwash cycle, the flow of wastewater 232 into the wastewater filter 200 is terminated and the flow of the filtrate from the wastewater filter 200 is stopped.

The backwash fluid line 222 provides a flow of backwash fluid (e.g., wastewater, filtrate, water, etc.) to the first filter media 208. In some constructions, the backwash fluid may be a liquid or a liquid/gas mixture if desired. The backwash gas line 224 provides a flow of backwash gas (e.g., air, nitrogen, fuel gas, etc.) to the second filter media 210, and specifically to the portion of the second filter media 210 disposed in the draft tube 212 near the lowermost opening of the draft tube 212. The backwash gas is preferably provided under pressure with the pressure selected to provide the desired rate of movement of the second filter media 210 within the draft tube 212. Factors that affect the desired pressure include the length of the draft tube 212, the type of media employed as the second filter media 210, the diameter or flow area of the draft tube 212, etc. As mentioned, a compressor or stored pressurized gas can be used as a source of backwash gas. In most arrangements, the flow of the backwash fluid and the backwash air begin simultaneously. However, some arrangements may start one of the flows some time period before the other of the flows is initiated.

Upon introduction of the backwash fluid and the backwash air, the first filter media 208 and the second filter media 210 expands and moves in countercurrent flows within the filter space 230. The backwash fluid is provided to the first filter media 208 at a preselected flow rate that is sufficient to mix and roll the first filter media 208. A flow rate of about 12 gpm/ft² (489 lpm/m²) has been found to be suitable with most arrangements operating in a range of between 6 gpm/ft² (244 lpm/m²) and 20 gpm/ft² (815 lpm/m²) depending on the thickness or depth (e.g., 12 inches (30.5 cm)) of the first filter media 208 as well as the materials used to form the first filter media 208.

As the backwash fluid flows upwards and mixes the first filter media 208, it also fluidizes the second filter media 210, which can start being rolled in the filter space 230. Due to the density of the first filter media 208, it is not significantly moved into the second filter media 210 and thus does not substantially mix with the second filter media 210. Similarly, the second filter media 210 does not get pulled down into the first filter media 208 since the size and density of the first filter media 208 are selected to substantially maintain the second filter media 210 floating above the first filter media 208 even as they are both fluidized and mixed.

The positioning of the draft tube 212 and the backwash gas line 224 above the first filter media 208 allow for the intake of the second filter media 210 into the draft tube 212 without it being plugged by the first filter media 208. Essentially the second filter media 210 uses the dense, fine first filter media 208 as a floor. In this way, the second filter media 210 adjacent the lowermost end of the draft tube 212 moves upward within the draft tube 212 toward the uppermost end in a direction counter to the flow of wastewater 232 during filtration. The second filter media 210 adjacent the uppermost end of the draft tube 212 moves along the outside of the draft tube 212 downward towards the lowermost end of the draft tube 212, thereby partially or completely rolling the second filter media 210 without also mixing it with the first filter media 208.

The second filter media 210 moves to the top or outlet of the draft tube 212 (i.e., the scrub zone) where it mixes and releases a portion of the contaminates (e.g., oil and suspended solids) immobilized in the second filter media 210. The second filter media 210 exiting the draft tube 212 at the uppermost opening aids in rolling the second filter media 210 such that all or a substantial portion of the second filter media 210 has an opportunity to mix in the scrub zone or headspace, where the bubbles produced by the backwash gas have the most kinetic energy and mix the second filter media 210 most vigorously. The contaminates and any backwash gas are drawn from the filter space 230 via a contaminant outlet (not shown) that is positioned at the top of the wastewater filter 200.

The backwash fluid and the backwash gas may continuously flow during backwash. Alternatively, the flow of one or both of the backwash fluid and backwash gas may be intermittent. In one embodiment, backwash gas continuously flows through the draft tube 212 while backwash fluid is pulsed into the first filter media 208. The pulsed flow may be periodic, in that the flow regularly cycles between off and on at preselected intervals. The period of time in which the backwash fluid flows may be the same as the period of time in which the backwash fluid flow is interrupted. For example, the backwash fluid may flow for a longer or shorter period of time than the period of time in which backwash fluid flow is interrupted. In one embodiment, the period of time in which the backwash fluid flows is substantially identical to the period of time in which backwash fluid flow is interrupted. Alternatively, the backwash gas may be pulsed while the backwash fluid flows continuously, or both the backwash gas and backwash fluid may be pulsed together or separately.

Once it is determined that sufficient contaminates (e.g., oil and suspended solids) have been removed from the first filter media 208 and the second filter media 210 and/or the backwash has been running for a predetermined period of time, the backwash cycle can be completed. To complete the backwash cycle, the flow of the backwash gas may be interrupted while the flow of the backwash fluid continues, and contaminants are removed from the vessel 202. Upon removal of the contaminants, the flow of the backwash fluid may be interrupted and feed forward flow of wastewater 232 may be initiated. The backwash process may result in a partial or one or more complete rolling of the first filter media 208 and/or the second filter media 210 during backwash. In other embodiments, the first filter media 208 and/or the second filter media 210 are rolled 2-5 times.

The controller 122 may also intermittently provide pulses of backwash gas to the draft tube 212 to aid in setting the first filter media 208 and the second filter media 210. A pulse of backwash gas through the draft tube 212 may disturb the first filter media 208 and/or the second filter media 210 after which the first filter media 208 and/or the second filter media 210 gravity settles. A pulse of backwash gas may then again be directed through the draft tube 212 to again disturb the first filter media 208 and/or the second filter media 210 after which the first filter media 208 and/or the second filter media 210 gravity settles. The pulsed bed setting may continue for a predetermined period of time or pulses, or until the first filter media 208 and/or the second filter media 210 has settled to a desired height, at which time the forward feed of the wastewater 232 is initiated. During pulsed bed settling with backwash gas, a liquid may, but need not, be pulsed into the vessel 202 to assist settling. Pulsing the liquid may occur between or at the same time as the backwash gas pulses to settle the first filter media 208 and/or the second filter media 210.

## Claims

1. A wastewater filter (102; 104; 200) comprising:
a vessel having a bottom (226) and a side wall (228) that cooperate to define a filter space (230);
a first filter media (208) positioned within the filter space (230) to define a first media layer;
a second filter media (210) different from the first filter media (208) positioned within the filter space (230) above the first media layer to define a second media layer, the first media layer and the second media layer cooperating to define an interface plane (214);
a draft tube (212) having a first end and a second end, the second end being disposed a second non-zero distance from a top surface (216) of the second media layer;
a backwash fluid line positioned to inject a backwash fluid into the first filter media (208); and
a backwash gas line (224) positioned to inject a backwash gas (116) into the draft tube (212);
**characterized in that** the draft tube (212) is positioned within the second media layer, and the first end of the draft tube (212) being positioned a first non-zero distance above the interface plane (214).

2. The wastewater filter (102; 104; 200) of claim 1, wherein the first media layer has a first density, and the second media layer has a second density that is less dense than the first density, and the backwash gas line (224) extends through the first media layer and includes an outlet positioned within the draft tube (212).

3. The wastewater filter (102; 104; 200) of claim 1 or 2, wherein the vessel includes a cover (204) that encloses the filter space (230), and wherein the filter space (230) is operated at a pressure greater than atmospheric pressure.

4. The wastewater filter (102; 104; 200) of claim 1 or 2, wherein the second filter media (210) includes one of walnut shells and a synthetic wood/plastic blend.

5. The wastewater filter (102; 104; 200) of claim 1 or 2, wherein the first filter media (208) includes one of sand and garnet.

6. The wastewater filter (102; 104; 200) of claim 1 or 2, wherein the first media layer defines a depth between 10 and 15 inches (25.4-38.1 cm) and the first non-zero distance is less than 5 inches (12.7 cm).

7. The wastewater filter (102; 104; 200) of claim 1 or 2, wherein the backwash fluid includes water.

8. The wastewater filter (102; 104; 200) of claim 1 or 2, wherein the backwash gas (116) includes air.

9. The wastewater filter (102; 104; 200) of claim 1 or 2 wherein the first filter media (208) is finer and denser than the second filter media (210).

10. The wastewater filter (102; 104; 200) of claim 9, wherein the first filter media (208) has a first density that is between 120 percent and 300 percent of a second density of the second filter media (210).

11. A method of backwashing a wastewater filter (102; 104; 200) that includes a draft tube (212), the method comprising:
positioning a first filter media (208) in a filter space (230) to define a first media layer;
positioning a second filter media (210) in the filter space on top of the first media layer to define a second media layer and an interface plane (214) between the first media layer and the second media layer, the second media layer extending a second non-zero distance above a second end of the draft tube (212);
injecting a backwash fluid into the first media layer, the backwash fluid having a first flow rate that is selected to mix and roll the first media layer and fluidize the second media layer without mixing the first media layer and the second media layer with one another; and
injecting a backwash gas (116) into the draft tube (212), the backwash gas (116) having a second flow rate selected to draw a portion of the second filter media (210) from a bottom portion of the second media layer to a top portion of the second media layer;
**characterized in that** the first media layer is disposed a first non-zero distance below a first end of the draft tube (212).

12. The method of claim 11, wherein the first filter media has a first density that is between 120 percent and 300 percent of a second density of the second filter media (210).

13. The method of claim 11, further comprising positioning a backwash gas line (224) such that an outlet of the backwash gas line (224) is positioned within the draft tube (212).

14. The method of claim 11, wherein the first media layer defines a depth between 10 and 15 inches (25.4-38.1 cm) and the first non-zero distance is less than 5 inches (12.7 cm).

15. The method of claim 11, wherein the first filter media (208) includes one of sand and garnet, and wherein the second filter media (210) includes one of walnut shells and a synthetic wood/plastic blend.

## Patentansprüche

1. Abwasserfilter (102; 104; 200), umfassend:
einen Behälter mit einem Boden (226) und einer Seitenwand (228), die zusammenwirken, um einen Filterraum (230) zu definieren;
ein erstes Filtermedium (208), das innerhalb des Filterraums (230) positioniert ist, um eine erste Medienschicht zu definieren;
ein zweites Filtermedium (210), das sich von dem ersten Filtermedium (208) unterscheidet, das innerhalb des Filterraums (230) über der ersten Medienschicht positioniert ist, um eine zweite Medienschicht zu definieren, wobei die erste Medienschicht und die zweite Medienschicht zusammenwirken, um eine Schnittstellenebene (214) zu definieren;
ein Saugrohr (212) mit einem ersten Ende und einem zweiten Ende, wobei das zweite Ende in einem zweiten Abstand ungleich null von einer oberen Oberfläche (216) der zweiten Medienschicht angeordnet ist;
eine Rückspülfluidleitung, die so positioniert ist, dass sie ein Rückspülfluid in das erste Filtermedium (208) einspritzt; und
eine Rückspülgasleitung (224), die so positioniert ist, dass sie ein Rückspülgas (116) in das Saugrohr (212) einspritzt;
**dadurch gekennzeichnet, dass** das Saugrohr (212) innerhalb der zweiten Medienschicht positioniert ist und das erste Ende des Saugrohrs (212) in einem ersten Abstand ungleich null über der Schnittstellenebene (214) positioniert ist.

2. Abwasserfilter (102; 104; 200) nach Anspruch 1, wobei die erste Medienschicht eine erste Dichte aufweist und die zweite Medienschicht eine zweite Dichte aufweist, die weniger dicht als die erste Dichte ist, und wobei sich die Rückspülgasleitung (224) durch die erste Medienschicht erstreckt und einen Auslass umfasst, der innerhalb des Saugrohrs (212) positioniert ist.

3. Abwasserfilter (102; 104; 200) nach Anspruch 1 oder 2, wobei der Behälter eine Abdeckung (204) umfasst, die den Filterraum (230) umschließt, und wobei der Filterraum (230) bei einem Druck betrieben wird, der größer als Atmosphärendruck ist.

4. Abwasserfilter (102; 104; 200) nach Anspruch 1 oder 2, wobei das zweite Filtermedium (210) Walnussschalen oder eine synthetische Holz-/Kunststoffmischung umfasst.

5. Abwasserfilter (102; 104; 200) nach Anspruch 1 oder 2, wobei das erste Filtermedium (208) Sand oder Granat umfasst.

6. Abwasserfilter (102; 104; 200) nach Anspruch 1 oder 2, wobei die erste Medienschicht eine Tiefe zwischen 10 und 15 Zoll (25,4-38,1 cm) definiert und der erste Abstand ungleich null weniger als 5 Zoll (12,7 cm) beträgt.

7. Abwasserfilter (102; 104; 200) nach Anspruch 1 oder 2, wobei das Rückspülfluid Wasser umfasst.

8. Abwasserfilter (102; 104; 200) nach Anspruch 1 oder 2, wobei das Rückspülgas (116) Luft umfasst.

9. Abwasserfilter (102; 104; 200) nach Anspruch 1 oder 2, wobei das erste Filtermedium (208) feiner und dichter als das zweite Filtermedium (210) ist.

10. Abwasserfilter (102; 104; 200) nach Anspruch 9, wobei das erste Filtermedium (208) eine erste Dichte aufweist, die zwischen 120 Prozent und 300 Prozent einer zweiten Dichte des zweiten Filtermediums (210) beträgt.

11. Verfahren zum Rückspülen eines Abwasserfilters (102; 104; 200), der ein Saugrohr (212) umfasst, wobei das Verfahren Folgendes umfasst:
Positionieren eines ersten Filtermediums (208) in einem Filterraum (230), um eine erste Medienschicht zu definieren;
Positionieren eines zweiten Filtermediums (210) in dem Filterraum auf der ersten Medienschicht, um eine zweite Medienschicht und eine Schnittstellenebene (214) zwischen der ersten Medienschicht und der zweiten Medienschicht zu definieren, wobei sich die zweite Medienschicht in einem zweiten Abstand ungleich Null über einem zweiten Ende des Saugrohrs (212) erstreckt;
Einspritzen eines Rückspülfluids in die erste Medienschicht, wobei das Rückspülfluid eine erste Strömungsrate aufweist, die so ausgewählt ist, dass die erste Medienschicht gemischt und gerollt und die zweite Medienschicht fluidisiert wird, ohne dass die erste Medienschicht und die zweite Medienschicht miteinander vermischt werden; und
Einspritzen eines Rückspülgases (116) in das Saugrohr (212), wobei das Rückspülgas (116) eine zweite Strömungsrate aufweist, die so ausgewählt ist, dass ein Teil des zweiten Filtermediums (210) von einem unteren Teil der zweiten Medienschicht zu einem oberen Teil der zweiten Medienschicht gezogen wird;
**dadurch gekennzeichnet, dass** die erste Medienschicht in einem ersten Abstand ungleich null unterhalb eines ersten Endes des Saugrohrs (212) angeordnet ist.

12. Verfahren nach Anspruch 11, wobei das erste Filtermedium eine erste Dichte aufweist, die zwischen 120 Prozent und 300 Prozent einer zweiten Dichte des zweiten Filtermediums (210) beträgt.

13. Verfahren nach Anspruch 11, ferner umfassend Positionieren einer Rückspülgasleitung (224), so dass ein Auslass der Rückspülgasleitung (224) innerhalb des Saugrohrs (212) positioniert ist.

14. Verfahren nach Anspruch 11, wobei die erste Medienschicht eine Tiefe zwischen 10 und 15 Zoll (25,4-38,1 cm) definiert und der erste Abstand ungleich null weniger als 5 Zoll (12,7 cm) beträgt.

15. Verfahren nach Anspruch 11, wobei das erste Filtermedium (208) Sand oder Granat umfasst, und wobei das zweite Filtermedium (210) Walnussschalen oder eine synthetische Holz-/Kunststoffmischung umfasst.

## Revendications

1. Filtre d'eaux usées (102 ; 104 ; 200), comprenant :
un récipient ayant un fond (226) et une paroi latérale (228) qui coopèrent pour définir un espace de filtre (230) ;
un premier milieu filtrant (208) positionné à l'intérieur de l'espace de filtre (230) pour définir une première couche de milieu ;
un second milieu filtrant (210) différent du premier milieu filtrant (208) positionné à l'intérieur de l'espace de filtre (230) au-dessus de la première couche de milieu pour définir une seconde couche de milieu, la première couche de milieu et la seconde couche de milieu coopérant pour définir un plan d'interface (214) ;
un tube d'aspiration (212) ayant une première extrémité et une seconde extrémité, la seconde extrémité étant disposée à une seconde distance non nulle par rapport à une surface supérieure (216) de la seconde couche de milieu ;
une conduite de fluide de lavage à contre-courant positionnée pour injecter un fluide de lavage à contre-courant dans le premier milieu filtrant (208) ; et
une conduite de gaz de lavage à contre-courant (224) positionnée pour injecter un gaz de lavage à contre-courant (116) dans le tube d'aspiration (212) ;
**caractérisé en ce que** le tube d'aspiration (212) est positionné à l'intérieur de la seconde couche de milieu, et la première extrémité du tube d'aspiration (212) étant positionnée à une première distance non nulle au-dessus du plan d'interface (214).

2. Filtre d'eaux usées (102 ; 104 ; 200) selon la revendication 1, dans lequel la première couche de milieu a une première densité, et la seconde couche de milieu a une seconde densité qui est moins dense que la première densité, et la conduite de gaz de lavage à contre-courant (224) s'étend à travers la première couche de milieu et inclut une sortie positionnée à l'intérieur du tube d'aspiration (212).

3. Filtre d'eaux usées (102 ; 104 ; 200) selon la revendication 1 ou 2, dans lequel le récipient inclut un cache (204) qui renferme l'espace de filtre (230), et dans lequel l'espace de filtre (230) fonctionne à une pression supérieure à la pression atmosphérique.

4. Filtre d'eaux usées (102 ; 104 ; 200) selon la revendication 1 ou 2, dans lequel le second milieu filtrant (210) inclut l'un de coquilles de noix et d'un mélange plastique/bois synthétique.

5. Filtre d'eaux usées (102 ; 104 ; 200) selon la revendication 1 ou 2, dans lequel le premier milieu filtrant (208) inclut l'un de sable et de grenat.

6. Filtre d'eaux usées (102 ; 104 ; 200) selon la revendication 1 ou 2, dans lequel la première couche de milieu définit une profondeur comprise entre 10 et 15 pouces (25,4-38,1 cm) et la première distance non nulle est inférieure à 5 pouces (12,7 cm).

7. Filtre d'eaux usées (102 ; 104 ; 200) selon la revendication 1 ou 2, dans lequel le fluide de lavage à contre-courant inclut de l'eau.

8. Filtre d'eaux usées (102 ; 104 ; 200) selon la revendication 1 ou 2, dans lequel le gaz de lavage à contre-courant (116) inclut de l'air.

9. Filtre d'eaux usées (102 ; 104 ; 200) selon la revendication 1 ou 2, dans lequel le premier milieu filtrant (208) est plus fin et plus dense que le second milieu filtrant (210).

10. Filtre d'eaux usées (102 ; 104 ; 200) selon la revendication 9, dans lequel le premier milieu filtrant (208) a une première densité qui est comprise entre 120 pour cent et 300 pour cent d'une seconde densité du second milieu filtrant (210).

11. Procédé de lavage à contre-courant d'un filtre d'eaux usées (102 ; 104 ; 200) qui inclut un tube d'aspiration (212), le procédé comprenant :
le positionnement d'un premier milieu filtrant (208) dans un espace de filtre (230) pour définir une première couche de milieu ;
le positionnement d'un second milieu filtrant (210) dans l'espace de filtre pardessus la première couche de milieu pour définir une seconde couche de milieu et un plan d'interface (214) entre la première couche de milieu et la seconde couche de milieu, la seconde couche de milieu s'étendant d'une seconde distance non nulle au-dessus d'une seconde extrémité du tube d'aspiration (212) ;
l'injection d'un fluide de lavage à contre-courant dans la première couche de milieu, le fluide de lavage à contre-courant ayant un premier débit qui est choisi pour mélanger et enrouler la première couche de milieu et fluidifier la seconde couche de milieu sans mélanger la première couche de milieu et la seconde couche de milieu l'une avec l'autre ; et
l'injection d'un gaz de lavage à contre-courant (116) dans le tube d'aspiration (212), le gaz de lavage à contre-courant (116) ayant un second débit choisi pour aspirer une partie du second milieu filtrant (210) d'une partie inférieure de la seconde couche de milieu vers une partie supérieure de la seconde couche de milieu ;
**caractérisé en ce que** la première couche de milieu est disposée à une première distance non nulle en dessous d'une première extrémité du tube d'aspiration (212).

12. Procédé selon la revendication 11, dans lequel le premier milieu filtrant a une première densité qui est comprise entre 120 pour cent et 300 pour cent d'une seconde densité du second milieu filtrant (210).

13. Procédé selon la revendication 11, comprenant en outre le positionnement d'une conduite de gaz de lavage à contre-courant (224) de telle sorte qu'une sortie de la conduite de gaz de lavage à contre-courant (224) est positionnée à l'intérieur du tube d'aspiration (212).

14. Procédé selon la revendication 11, dans lequel la première couche de milieu définit une profondeur comprise entre 10 et 15 pouces (25,4-38,1 cm) et la première distance non nulle est inférieure à 5 pouces (12,7 cm).

15. Procédé selon la revendication 11, dans lequel le premier milieu filtrant (208) inclut l'un de sable et de grenat, et dans lequel le second milieu filtrant (210) inclut l'un de coquilles de noix et d'un mélange plastique/bois synthétique.
